# EUROPÄISCHE PATENTSCHRIFT

(11) **EP 2 190 632 B1**
(45) Veröffentlichungstag und Bekanntmachung des Hinweises auf die Patenterteilung: **25.05.2011**
(21) Anmeldenummer: 08801187.9
(22) Anmeldetag: 19.08.2008
(51) Int. Cl.: B25J 9/10, B25J 15/02, B25J 15/08, B25J 15/10

(54) **GREIFMECHANISMUS MIT ZWEI ANTRIEBSWELLEN PRO GREIFERFINGER**
GRIPPER MECHANISM WITH TWO DRIVESHAFTS PER GRIPPING FINGER
MÉCANISME DE PRÉHENSION AVEC DEUX ARBRES D'ENTRAÎNEMENT POUR CHAQUE DOIGT DE PRÉHENSION

(30) Priorität: 21.08.2007 DE 102007039398
(43) Veröffentlichungstag der Anmeldung: 02.06.2010
(73) Patentinhaber: Saadat M. Mohsen, 59494 Soest (DE)
(72) Erfinder: SAADAT, Fereshteh, 59494 Soest (DE)
(86) Internationale Anmeldenummer: PCT/DE2008/001364
(87) Internationale Veröffentlichungsnummer: WO 2009/024137

(56) Entgegenhaltungen:
- DE-A1- 3 841 041
- DE-A1- 4 014 002
- JP-A- 1 246 088
- JP-A- 52 101 567
- SU-A1- 568 542
- SU-A1- 1 337 251

## Beschreibung

Die Erfindung betrifft einen Greifmechanismus für Maschinen, Roboter und Handhabungsgeräte mit wenigstens ei e beweglichen Greiferfinger, der als Koppel eines Führungsgetriebes geführt ist und den Greiferfinger von der vorderen Arbeitsseite nach hinten zur Seite schwenkt.

Ein solcher Greifmechanismus ist aus der SU-A-1337251 bekannt.

Die Offenlegungsschrift DE 10 2004 056 229 A1 zeigt einen Kraftspanner, der durch eine Kolben-Zylinder-Einheit (21) pneumatisch betätigt wird. Bei diesem Kraftspanner greift die Kolbenstange (3) mittels Bolzen (6) in die Nut (5) einer Kurvenscheibe (4), die an einer dreiteilig gestalteten Kurbel (4, 25, 26) befestigt ist. Die drei Teile der Kurbel (4, 25, 26) sind miteinander axial verstiftet und verschraubt. Die beidseitigen Lager der Kurbel befinden sich direkt an den Kurbelteilen (25, 26), so dass das Gehäuse zwecks Montage der Kurbel aus zwei Teilen (34, 35) besteht. Das Drehmoment der Kurvenscheibe wird außerhalb des Gehäuses mit klassischer Methode des Maschinenbaus über viereckig gestaltete Wellenenden direkt auf den Arm (2) des Spanners übertragen, der eine Rotationsbewegung um seine Drehachse vollführt.

Dabei drückt der Arm (2) durch seine rotatorische Bewegung nur bei einer bestimmten Objektdicke mit der ganzen Fläche parallel auf das Objekt. Bei unterschiedlich dicken Teilen berührt der Arm (2) des Spanners das zu haltende Objekt nur linienförmig.

Die Gebrauchsmusterschrift DE 200 21 296 U1 beschreibt ein Handhabungsgerät bestehend aus einem Gelenkparallelogramm (1, 4, 3, 6), an dessen Koppel (4) ein nicht näher beschriebener Greifmechanismus (5) auf einer Kreisbahn parallel zu sich geführt wird.

Zwei Lenker (1, 3) des Gelenkparallelogramms werden in Form einer Riemenradwelle (9, 10) oder einer Zahnradwelle (27, 28) im Gestell (6) gelagert und mit Hilfe eines Zahnriemens (8) oder eines Zahnrades (29) synchron angetrieben. Dadurch kann sich der Arm (4) des Handhabungsgerätes mit seinem Greifmechanismus (5) von der einen Seite durch die Deck- und Strecklage des Gelenkparallelogramms auf die andere Seite bewegen, ohne die Orientierung des Werkstückes zu verändern oder sich in die antiparallele Lage zu begeben.

Dieses Handhabungsgerät hat die Aufgabe, ein Werkstück von A nach B zu transportieren, ohne seine Orientierung zu verlieren. Es spannt jedoch kein Werkstück zwischen seinen Gliedern. Das Werkstück wird durch einen nicht näher beschriebenen Greifer (5) gegriffen und gehalten.

Greifmechanismen, deren Greiferfinger durch eine Antriebswelle in Bewegung gesetzt werden, bewegen ihren Greiferfinger entweder rotatorisch durch ein Drehgelenk, das im Gestell gelagert ist, Winkelgreifer genannt, oder parallel als Koppel eines Gelenkparallelogramms, Parallelgreifer genannt. Die Winkelgreifer haben den Vorteil, ihre Greiferfinger im geöffneten Zustand aus dem Arbeitsbereich vor dem Greifergehäuse wegschwenken zu können. Andere Objekte können ungestört am Greifer vorbei transportiert werden. Sie haben jedoch den großen Nachteil, ihre Greiferfingers bei unterschiedlicher Objektgröße unter unterschiedlichen Winkeln an das Objekt anzulegen, was die Gestaltung der Greifbacken sowie die Verwendung des Greifers für unterschiedlich große Greifobjekte schwierig macht und stark einschränkt. Die Parallelgreifer, die ihre Greiferfinger als Koppel eines Gelenkparallelogramms führen, besitzen ihrerseits den Nachteil, ihre Greiferfinger nicht oder nicht vollständig aus dem Arbeitsbereich vor dem Greifergehäuse zur Seite schwenken zu können, da das Gelenkparallelogramm in eine instabile Lage, Deck- bzw. Strecklage, gerät, bei der der Greiferfinger keine Kraft auf das Greifobjekt ausüben und in dieser Position auch antiparallel weiterlaufen kann.

Demgegenüber liegt der Erfindung die Aufgabe zugrunde, einen Greifmechanismus zu kreieren, dessen Greiferfinger sich aus dem Arbeitsbereich vor dem Greiferkörper völlig weg schwenkt, in jeder Greifposition, d.h. auch in der Deck- und Strecklage sicher und ohne zu kippen greift, um eine möglichst breite Anwendung der Winkel- und Parallelgreifer miteinander zu kombinieren.

Diese Aufgabe wird erfindungsgemäß mit den in Anspruch 1 angegebenen Merkmalen gelöst.

Die Unteransprüche stellen vorteilhafte Weiterbildungen der Erfindung dar.

Aufgrund der Führung des Greiferfingers durch zwei Antriebswellen, die ihrerseits jeweils durch eine Kurbel, Kette, ein Zahnrad, einen Flachriemen, Zahnriemen oder einen Lenker angetrieben werden, ist es möglich, den Greiferfinger durch seine Deck- oder Strecklage seines Führungsgetriebes hindurch bis über 180° Drehung der Antriebswelle zu bewegen und dabei sicher Kräfte und Momente zu übertragen, ohne zu kippen bzw. in eine instabile Lage zu geraten.

Jeder Greiferfinger wird an zwei Punkten entweder durch zwei Drehgelenke oder durch einen Drehgelenk und eine Kulisse geführt. An den beiden Drehgelenken oder an einem Drehgelenk und in der Kulisse des Greiferfingers greift jeweils ein Lenker, der seinerseits mit einer angetriebenen Getriebewelle (Kurbelwelle, Zahnradwelle, Riemenradwelle, Kettenradwelle) verbunden ist. Die Antriebswellen werden mit Hilfe einer Betätigungseinheit pneumatisch, hydraulisch oder elektromotorisch angetrieben. Die Kulisse kann sich auch in einem der durch die Antriebswelle angetriebenen Lenker befinden, während sich am Greiferfinger zwei Drehgelenke befinden. Die Kulisse kann ebenfalls durch einen weiteren Lenker mit beidseitigen Drehgelenken, ein so genanntes binäres Glied, ersetzt werden. Bei parallelogrammförmiger Anordnung der beiden angetriebenen Lenker mit dem Antriebsglied der Betätigungseinheit und dem Greiferfinger kann auf die Kulisse bzw. auf das binäre Glied verzichtet werden, da das Gelenkparallelogramm auch mit zwei angetriebenen Lenkern eindeutig umlauffähig ist.

Damit die Antriebswellen, Kurbel- und/oder Zahnradwelle, komplett in einem geschlossenen und ungeteilten Gehäuse, Staub geschützt und hermetisch abgedichtet, untergebracht werden können, werden sie in mindestens zwei Teile geteilt. Bei dreier Teilung der Antriebswelle können zum Beispiel die beidseitigen Lagerzapfen der Antriebswellen getrennt als Halslager an den angetriebenen Lenkern ausgebildet werden. Dadurch kann der angetriebene Mittelteil der Antriebswelle im Durchmesser kleiner als der Durchmesser eines der beiden Lagerzapfen ausgebildet und bei der Montage durch die größere Lagerbohrung des Greifergehäuses in das Greifergehäuse eingeführt werden. Nach der Montage der angetriebenen Lenker des Greifmechanismus mit ihren integrierten Halslagern und deren axiale Verbindung mit dem Mittelteil der Antriebswelle, erhält die Antriebswelle ihre vollständige Lagerung. Einer der beiden Lagerzapfen kann auch am Mittelteil der zwei geteilten Antriebswelle ausgebildet werden. Der zweite Lagerzapfen sitzt in diesem Fall als Halslager direkt an dem angetriebenen Lenker.

Für die Zentrierung und Übertragung des Drehmomentes zwischen den einzelnen Teilen der geteilten Antriebswelle sorgt eine axiale Verzahnung an den Stirnseiten der Teile, die auch in Form einer Triebstockverzahnung mittels Stiften und Bohrungen ausgeführt werden kann.

Die axiale Lagerung der Antriebswelle erfolgt vorzugsweise durch eine Trag-Stütz-Lagerung, die in X- oder O-Anordnung ausgeführt werden kann. Bei der X-Anordnung liegen die Axiallagerflächen zwischen den Stirnseiten des angetriebenen mittleren Teils der Antriebswelle und dem Greifergehäuse, d.h. innerhalb des Greifergehäuses. Bei der O-Anordnung liegen die Axiallagerflächen an den angetriebenen Lenkern koaxial zu den Halslagern außerhalb des Greifergehäuses.

Koaxial um die Halslager werden unterhalb der durch die Antriebswellen angetriebenen Lenker zweckmäßigerweise Axialdichtringen platziert, die das Greifergehäuse hermetisch abdichten und das Eindringen von Staub und Schmutz in das Greifergehäuse verhindern.

In einfachster Ausführung besitzt ein erfindungsgemäßer Greifmechanismus einen Greiferfinger, der mittels zwei einseitig oder beidseitig an die Antriebswellen angebrachten Lenker auf einer vorzugsweise kreisförmigen Bahn geführt wird und als Spannvorrichtung gegen einen feststehenden Finger oder Maschinenteil arbeitet. Besitzt die Antriebswelle einen einseitig angebrachten Lenker, so befindet sich vorzugsweise das eine Halslager mit oder ohne Axiallager an diesem Lenker. Das zweite Halslager bildet ein frei laufendes einfaches Drehteil mit axialer Verzahnung bzw. Bohrungen, mit oder ohne Axiallagerflächen, als Widerlager oder es ist fester Bestandteil des angetriebenen mittleren Teils der Antriebswelle. Beide Lager, Halslager und Widerlager, haben eine gemeinsame Achse und bilden die gestellfeste Drehachse der Antriebswelle.

Besteht der angetriebene Lenker aus zwei beidseitig an die Antriebswelle angebrachten Lenkerhälften, so sind vorzugsweise die beiden Radiallager mit ihrer axialen Verzahnung, mit oder ohne Axiallagerflächen, als Halslager fester Bestandteil der beiden Lenkerhälften.

Das Gehäuse eines derart konzipierten Greifmechanismus kann aus dem Vollen gefertigt, aus einem Stück gegossen oder aus einem Strangpressprofil gefertigt werden. Es besitzt einen geschlossenen Hohlraum für die Aufnahme der Antriebseinheit sowie seitlich um die Antriebseinheit angeordnete, offene bzw. U-förmigen Räume zwecks Aufnahme der Antriebswellen. Nach der Montage der Antriebseinheit und der Einführung der inneren Teile der Antriebswelle in die dafür vorgesehenen U-profilförmigen Räume werden diese mit entsprechenden Deckeln und Befestigungselementen geschlossen. Zum Schluss werden die Halslager mit oder ohne Lenker ein- oder beidseitig von außen in die Lagerbohrungen des Gehäuses eingesteckt und axial mit dem mittleren Teil der Antriebswelle durch eine axiale Verzahnung oder mittels Bohrungen und Stiften formschlüssig befestigt. Bei einem einseitigen Lenker kann ein freilaufendes Widerlager das zweite Halslager der Antriebswelle bilden. Durch die Teilung der Antriebswelle in mindestens zwei Teilen, angetriebener Mittelteil und Lenker, sowie durch die Teilung deren axiale Verzahnung bzw. der Stifte und Bohrungen lässt sich die Position der angetriebenen Lenker in Bezug auf die Position deren Antriebswelle in unterschiedlichen Stellungen montieren. Somit erreicht man eine flexible Öffnungs- und Schließposition der Greiferfinger je nach Aufgabe, Objektgröße und Bedarf.

Die Stirnseiten des mittleren Teils der Antriebswelle werden außerhalb der Verzahnungsflächen als Axiallagerfläche für eine Trag-Stütz-Lagerung der X-Anordnung gestaltet. Sie stützen sich gegen das im Gehäuse eingesetzte Axiallager ab. Bei der O-Anordnung der axialen Trag-Stütz-Lagerung der Antriebswelle liegen die Axiallagerflächen an den Stirnseiten der beidseitigen Halslager, im Lenker und Widerlager oder direkt an den angetriebenen Lenkerhälften. Bei der einseitigen Fingeranordnung wird das gesamte Drehmoment der Antriebswelle einseitig auf den Lenker übertragen.

Bei Anwendungen, die einen breiteren Greifbacken benötigen, wird anstelle des Widerlagers ein zweiter Lenkerteil spiegelbildlich zum ersten an die Antriebswelle angesetzt und außerhalb des Gehäuses mit der anderen Hälfte des geteilten Greiferfingers befestigt. Die beiden Greiferfingerteile sind an ihren Spitzen durch die breitere Greifbacke miteinander verbunden. Durch die Teilung des Fingers ist dafür gesorgt, dass die breite Greifbacke beim Drehen um das Greifergehäuse nicht daran stößt. Die vier angetriebenen Lenkerteile zusammen mit den beiden Fingerhälften und dem Backenträger auf der einen Seite und den beiden im Greifergehäuse gelagerten mittleren Teile der Antriebswelle auf der anderen Seite ergeben einen in sich geschlossenen biege- und torsionssteifen Fingermechanismus. Die Antriebswellen werden in diesem Fall beidseitig symmetrisch belastet. Das Biegeund Torsionsmoment wirkt in jedem Lenker als Zug- oder Druckbelastung, wodurch die Belastbarkeit des Greifers enorm zunimmt. Für staubige Räume und für Explosion geschützte Anwendungen werden am Ende der Halslager außerhalb der Lagerflächen, jedoch unterhalb der angetriebenen Lenker oder unterhalb des Kopfes des Widerlagers, flache Axialdichtungen eingesetzt, um den Greifmechanismus komplett abzudichten.

In allen Fällen können die Position der angetriebenen Lenker relativ zur Antriebswelle im Rahmen der Zahnteilung bzw. der Teilung der Stifte und Bohrungen beliebig verändert werden, um den Greifbereich einzelner Greiferfinger dem Anwendungsfall anzupassen.

Bei einem Greifmechanismus mit zwei oder mehr beweglichen Greiferfingern existieren entsprechend je zwei Antriebswellen pro Greiferfinger, die konzentrisch um die Betätigungseinheit platziert sind, um mit einer einzigen Betätigungseinheit alle Greiferfinger zwangläufig und synchron zu bewegen.

Der Greifmechanismus kann pneumatisch, elektromotorisch, hydraulisch oder anders betätigt werden. Die Betätigungseinheit treibt entweder die beiden Antriebswellen eines jeden Greiferfingers an oder sie treibt nur eine Antriebswelle an, die ihrerseits die zweite Antriebswelle durch einen Lenker, einen Riemen- oder Zahnriemen, eine Verzahnung oder eine Kette antreibt.

Es ist auch denkbar, dass jeder Fingermechanismus einen eigenen Antrieb erhält, die auch wie z.B. durch Federn miteinander gekoppelt sein können, um auch nicht mittig positionierte Teile oder geometrisch nicht symmetrische Teile dennoch sicher zu greifen.

Ein derartig konzipierter Greifmechanismus führt jeden seiner Greiferfinger durch zwei angetriebene Lenker oder Lenkerpaare als Koppel eines mehrgliedrigen Gelenkgetriebes auch über die Streck- und Decklage seiner Getriebeglieder sicher und eindeutig weiter, ohne zu kippen oder zu klemmen. Dadurch lässt sich für jeden Greiferfinger einen anderen Bewegungsbereich bis über 180° realisieren und ihn selbst bei paralleler Bewegung aus dem Arbeitsbereich vor dem Greifer weg schwenken und den Raum vor dem Greifergehäuse für andere Aufgaben freihalten.

Im Einzelnen zeigen:
- Fig. 1: einen Längsschnitt durch einen erfindungsgemäßen Greifmechanismus mit zwei Antriebswellen pro Greiferfinger, die von einem Schieber und ei- ner Koppel eines Schubkurbelgetriebes angetrieben werden.
- Fig. 2: einen Längsschnitt durch einen erfindungsgemäßen Greifmechanismus mit zwei verzahnten Antriebswellen pro Greiferfingers, die von einem ver- zahnten Schieber eines Zahnrad-Zahnstangen-Getriebes angetrieben werden.
- Fig. 3: einen Längsschnitt durch einen erfindungsgemäßen Greifmechanismus mit zwei verzahnten Antriebswellen pro Greiferfinger, wobei die erste von einem Schubkurbelgetriebe angetrieben, und die zweite über einen Rie- men oder eine Kette von der ersten Antriebswelle angetrieben wird.
- Fig. 4: einen Querschnitt durch eine angetriebene und dreiteilig gestaltete Kur- belwelle des erfindungsgemäßen Greifmechanismus mit einem Lenker- paar, das drehgelenkig mit einem Greiferfinger verbunden ist.

Identische Teile haben die gleiche Ziffer oder den gleichen Buchstaben. Unterschiedliche Indizes kennzeichnen verschiedene Bereiche oder unterschiedliche Ausführungen oder mehrfache Anordnung desselben Elementes.

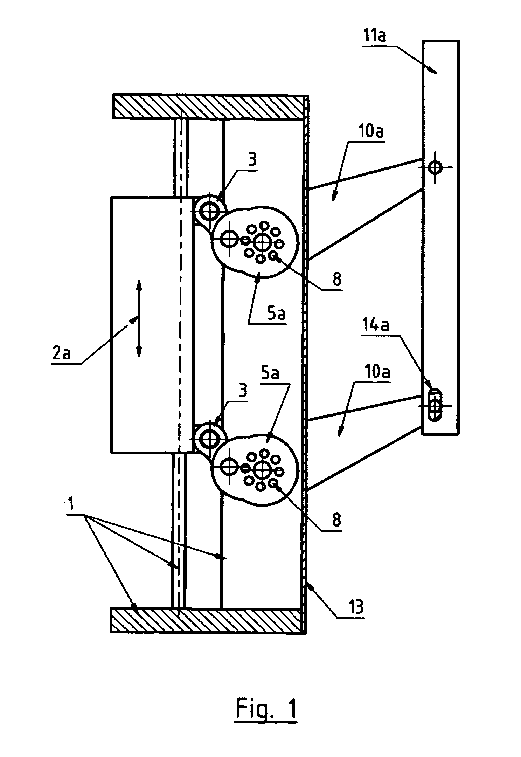

Gemäß Fig. 1 besitzt der Greifmechanismus ein stabiles Greifergehäuse (1), das mit dem Flansch des Roboters befestigt wird. Innerhalb des Greifergehäuses (1) befindet sich eine Betätigungseinheit, nicht dargestellt, die pneumatisch, hydraulisch oder elektromotorisch den Schieber (2a) in eine translatorische Bewegung versetzt. Der Schieber (2a) treibt mittels der Koppeln (3) die vorzugsweise mehrteilig gestalteten Kurbelwellen (5a) an, die formschlüssig jedoch trennbar an den Lenkern (10a) befestigt sind. Die Lenker (10a) führen an ihren Enden den Greiferfinger (11a) gelenkig. Während der obere Lenker (10a) durch ein Drehgelenk mit dem Greiferfingers (11a) verbunden ist, führt der untere Lenker (10a) einen anderen Punkt des Greiferfingers (11a) in einer Kulisse (14a). Dadurch können die Lenker (10a) unterschiedlich lang sein oder die Kurbelwellen (5a) unterschiedlichen Drehwinkel durchführen, um dem Greiferfinger (11a) beim Öffnungs- oder Schließvorgang eine zusätzliche Rotation zu verleihen. Durch die Bahnform der Kulisse (14a) kann ebenfalls dem Greiferfinger eine zusätzliche Bewegung ermöglicht werden, und zwar jedem Greiferfinger eine andere Bewegung, wenn die Handhabungsaufgabe dies erfordert. Die Kulisse (14a) kann auch an einem der beiden Lenker (10a) angebracht werden. So dass der Greiferfinger (11a) an zwei Drehgelenken geführt wird. Bei paralleler und gleichlanger Anordnung der beiden Lenker (10a) kann auf die Kulisse am Greiferfinger oder am Lenker ganz verzichtet werden. Der an zwei Lenkern (10a) geführte Greiferfinger (11a) kann sich auch in seiner Streck- bzw. Decklage mit den Lenkern (10a) eindeutig und sicher weiterbewegen und dabei Kräfte und Momente auf das Greifobjekt ausüben, ohne dabei zu kippen.

Der Schieber (2a) der Betätigungseinheit kann pneumatisch, hydraulisch oder elektromotorisch angetrieben werden. Er kann in zwei separate Antriebe in Tandem- oder koaxialer Anordnung zerlegt und form-, kraft- oder reibschlüssig miteinander gekoppelt werden, um die beiden Lenker (10a) beispielsweise durch Federkraft mit Verzögerung oder ganz getrennt voneinander anzutreiben, nicht dargestellt. Der Deckel (13) schließt den Getrieberaum hermetisch ab, so dass der Greifmechanismus komplett abgedichtet ist.

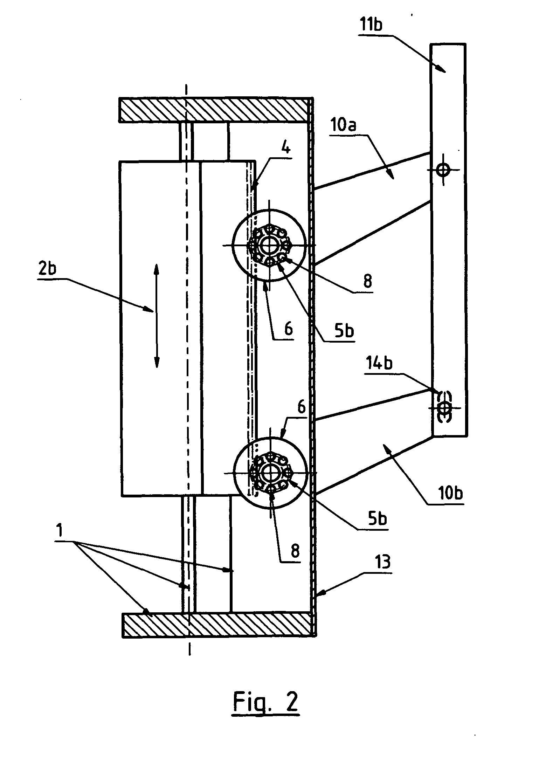

Gemäß Fig. 2 versetzt der linear angetriebene Schieber (2b) der Betätigungseinheit mit seiner Zahnstange (4) zwei vorzugsweise mehrteilig gestaltete Zahnradoder Ritzelwellen (5b) in Rotationsbewegung. Die Radiallager (6) der Ritzelwellen (5b) sind entweder direkt an der Ritzelwelle (5b) angebracht oder sie sind als Halslager ein fester Bestandteil der Lenker (10a, 10b), die mit Hilfe einer axialen Verzahnung, die auch als eine Art Triebstockverzahnung in Form von Bohrungen und Stiften (8) ausgeführt werden kann, mit den Ritzelrädern (5b), im Winkel verstellbar, verbunden sind. Der obere Lenker (10a) ist an seinem Ende drehgelenkig mit dem Greiferfinger (11b) verbunden. Der untere Lenker (10b) besitzt an seinem Ende eine Kulisse (14b), in die der Lagerbolzen des Greiferfingers (11b) eingreift. Beide angetriebenen Lenker (10a, 10b) führen den Greiferfinger (11b) eindeutig auch über seine Deck- und Strecklage hinaus.

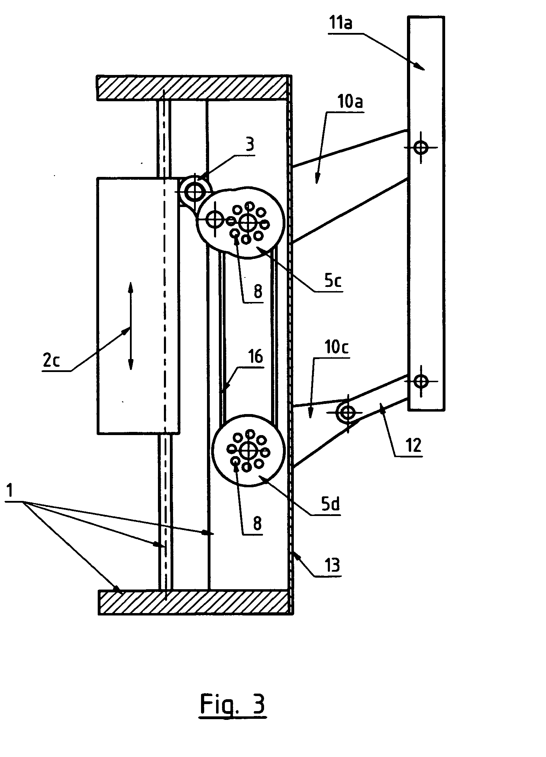

Gemäß Fig. 3 besitzt die obere Kurbelwelle (5c) eine Verzahnung für einen Ketten- oder Riemen- oder Zahnriementrieb (16) und treibt gleichzeitig die untere Kettenrad- oder Riemen- bzw. Zahnriemenradwelle (5d) an. Der Ketten- bzw. Riementrieb (16) kann auch durch einen Lenker ersetzt werden, der mit seinen Enden gelenkig an den beiden Antriebswellen (5c, 5d) angreift, nicht dargestellt.

Die Kulisse (14a, 14b) ist hier durch ein binäres Glied (12) mit zwei Drehgelenken ersetzt worden. Somit entfällt das Fräsen und Härten der Kulisse und des eventuell vorhandenen Kulissensteins.

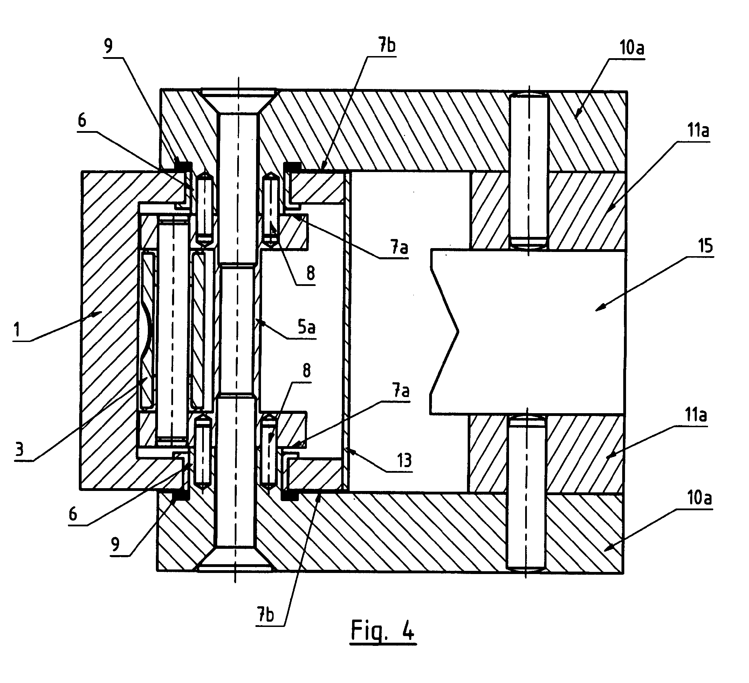

Gemäß Fig. 4 ist der angetriebenen Lenker (10a) beidseitig des treibenden Mittelteils der Kurbelwelle (5a), d.h. doppelt angeordnet. Jede Lenkerhälfte (10a) beinhaltet ein Radiallager als Halslager (6), einen Axialdichtring (9) und gegebenenfalls auch eine Axiallagerfläche (7b) für eine Trag-Stütz-Lagerung der O-Anordnung. Der mittlere Teil der Antriebswelle, die Kurbel (5a), bildet gemeinsam mit den Halslagern (6) des Lenkerpaares (10a) eine vollständige Kurbelwelle als Antriebswelle und wird über die Koppel (3) durch die Betätigungseinheit angetrieben. Das Lenkerpaar (10a) lagert und zentriert mit seinen Halslagern (6) den mittleren Teil der Antriebswelle, ob Kurbelwelle, Zahnradwelle, Riemenwelle oder Kettenwelle, und macht aus denen mit Hilfe der axialen Verzahnung oder den Stiften (8) und den zugehörigen Bohrungen eine biege- und torsionssteife Antriebswelle. Die Axiallagerflächen (7a) der Antriebswelle sind vorzugsweise an den Stirnseiten des mittleren Teils der Antriebswelle angebracht und dienen zur axialen Lagerung der Antriebswelle in der X-Anordnung. Sie stützen sich gegen den innenseitig liegenden Bund des Radialgleitlagers mit Bund, das innenseitig in das Gehäuse (1) eingesetzt ist. Selbstverständlich können die Gleitlager auch durch Wälzlager ersetzt werden. In diesem Falle würde eine Fest-Los-Lagerung vorteilhafter sein.

Das Lenkerpaar (10a) greift mit seinem freien Ende drehgelenkig in die Fingerhälften (11a) ein, die durch den Backenträger (15) miteinander verbunden und auf Abstand gehalten werden.

## Patentansprüche

1. Greifmechanismus für Maschinen, Roboter und Handhabungsgeräte mit wenigstens einem beweglichen Greiferfinge (11a,11b) der als Koppel eines Führungsgetrebes (1,10,11,12) geführt ist und den Greiferfinger von der vorderen Arbeitsseite nach hinten zur Seite schwenkt, **dadurch gekennzeichnet, dass** der Greiferfinger (11a, 11b) durch zwei Antriebswellen, wie z.B. Kurbelwelle (5a, 6), Zahnradwelle (5b, 5c, 6), Ketten- oder Riemenwelle (5d, 6), des Führungsgetriebes (1, 10, 11, 12) geführt ist, die von einer gemeinsamen Betätigungseinheit oder von zwei getrennten oder zwei miteinander form-, kraftoder reibschlüssig gekoppelten Betätigungseinheiten angetrieben werden.

2. Greifmechanismus nach Anspruch 1, **dadurch gekennzeichnet,**
**dass** die Antriebswelle (5a, 5b, 5c, 5d, 6) mehrteilig, vorzugsweise dreiteilig, mit einem angetriebenen Mittelteil, bestehend aus einer Kurbel (5a) oder einem Zahnrad (5b) oder einem Zahnriemenrad (5c) oder einem Kettenrad, und zwei Lagerteilen als Halslager (6) oder Widerlager, beidseitig des Mittelteils, gestaltet ist, und die Zentrierung der Teile relativ zu einander sowie die Übertragung des Drehmomentes vom angetriebenen Mittelteils der Antriebswelle ((5a, 5b, 5c, 5d) auf die Halslager (6) und von dort auf die Lenker (10a, 10b, 10c) des Führungsgetriebes formschlüssig und trennbar durch stirnseitige Verzahnung oder axiale Bohrungen mit Stiften (8) erfolgt.

3. Greifmechanismus nach Anspruch 1 oder 2, **dadurch gekennzeichnet,**
**dass** die Lagerzapfen (6) der Antriebswellen (5a, 5b, 5c, 5d, 6) als Halslager fester Bestandteil der durch die Antriebswellen angetriebenen Lenker (10a, 10b, 10c) sind.

4. Greifmechanismus nach Anspruch 1 oder 2, **dadurch gekennzeichnet,**
**dass** die Lagerzapfen (6) der Antriebswellen fester Bestandteil des Mittelteils (5a, 5b, 5c, 5d) der Antriebswellen sind.

5. Greifmechanismus nach einem der Ansprüche 2 oder 3, **dadurch gekennzeichnet,**
**dass** die Stirnseiten des Mittelteils (5a, 5b, 5c, 5d) der Antriebswellen als Axiallagerflächen (7a) der Antriebswellen gestaltet sind.

6. Greifmechanismus nach Anspruch 2 oder 3, **dadurch gekennzeichnet,**
**dass** die Axiallagerflächen (7b) der Antriebswelle an den Stirnseiten der durch die Antriebswellen angetriebenen Lenker (10a, 10b, 10c) oder eines Lenkers und eines Gegenlagers gestaltet sind.

7. Greifmechanismus nach einem der vorhergehenden Ansprüche, **dadurch gekennzeichnet,**
**dass** mehrere Greiferfinger (11a, 11 b) als Koppel eines Führungsgetriebes (1, 10, 11, 12) durch je zwei Antriebswellen (5, 6) angetrieben werden, die um eine zentrale Betätigungseinheit angeordnet sind oder jeweils ihre eigene Betätigungseinheit besitzen.

## Claims

1. Gripper mechanism for machines, robots and handling equipment, comprising at least one movable gripping finger (11a, 11b) which is guided as a coupler of a guiding drive system (1,10,11,12) and swings the gripping finger from the operating front position backwards and sideways, **characterized in that**
the gripping finger (11a, 11b) is guided by two drive shafts, such as crank shaft (5a, 6), gear wheel shaft (5b, 5c, 6), chain sprocket or belt pulley shaft (5d, 6), of the guiding drive system (1, 10, 11, 12), which are driven by a joint actuating unit or two separate actuating units or two actuating units which are coupled together by positive, non-positive or frictional interengagement.

2. Gripper mechanism according to claim 1, **characterized in that** the drive shaft (5a, 5b, 5c, 5d, 6) is of multiple-section design, preferably three sections, comprising a driven central section, comprising a crank (5a) or a tooth gear (5b) or a toothed belt sprocket (5c) or a chain sprocket and two bearing sections serving as neck bearings (6) or end support bearings on both sides of the central section, and the centering of the sections in relation to one another as well as the transmission of the torque from the driven central section of the drive shaft (5a, 5b, 5c, 5d) onto the neck bearings (6) and from there onto the connecting bars (10a, 10b, 10c) of the guiding drive system is brought about in form-fitting and separable manner by tooth intermeshing on the end face sides or by axial bores with pins (8).

3. Gripper mechanism according to claim 1 or 2, **characterized in that** the axle journals (6) of the drive shafts (5a, 5b, 5c, 5d, 6) in the form of neck bearings form a fixed component of the connecting bars (10a, 10b, 10c) driven by the drive shafts.

4. Gripper mechanism according to claim 1 or 2, **characterized in that** the axle journals (6) of the drive shafts form a fixed component of the central section (5a, 5b, 5c, 5d) of the drive shafts.

5. Gripper mechanism according to any one of either claim 2 or 3, **characterized in that**
the end faces of the central section (5a, 5b, 5c, 5d) of the drive shafts are designed as axial bearing surfaces (7a) of the drive shafts.

6. Gripper mechanism according to claim 2 or 3, **characterized in that** the axial bearing surfaces (7b) of the drive shaft are provided at the end face sides of the connecting bars (10a, 10b, 10c) driven by the drive shafts or of a connecting bar and an end supporting bearing.

7. Gripper mechanism according to any one of the preceding claims, **characterized in that**
a plurality of gripping fingers (11 a, 11 b) are each driven as a coupler of a guiding drive system (1, 10, 11, 12) by two drive shafts (5, 6) arranged about a central actuating unit or having each their own actuating unit.

## Revendications

1. Mécanisme de préhension pour machines, robots et appareils de manutention avec au moins un droit préhenseur mobile (11 a, 11 b) entraîné en liaison avec un dispositif de transmission de mouvement (1,10,11,12) et basculant le doigt préhenseur du côté de travail avant vers l'arrière de côté, et **caractérisé par le fait que**
le doigt préhenseur (11a, 11b) est entraîné par deux arbres d'entraînement tels qu'un vilebrequin (5a, 6), un arbre à pignons (5b, 5c, 6), un arbre à poulie de chaîne ou de courroie (5d, 6), un dispositif de transmission de mouvement (1, 10, 11, 12), entraînés par une unité d'actionnement commune ou par deux unités d'actionnement séparées ou couplées par liaison solidaire, par force ou par frottement.

2. Mécanisme de préhension selon la revendication 1, **caractérisé par le fait que** l'arbre d'entraînement (5a, 5b, 5c, 5d, 6) est doté de plusieurs pièces, de préférence trois, avec une pièce centrale entraînée, composée d'une manivelle (5a), d'un pignon (5b), d'une poulie dentée (5c) ou d'une poulie à chaîne, et de deux éléments de palier tels qu'un palier à collet (6) ou un palier de butée des deux côtés de la pièce centrale ; et le centrage des éléments entre eux ainsi que la transmission du couple de rotation de la pièce centrale entraînée de l'arbre d'entraînement (5a, 5b, 5c, 5d) au palier à collet (6) puis à la bielle (10a, 10b, 10c) du dispositif de transmission soit réalisée par liaison solidaire et séparable au moyen d'une denture frontale ou d'orifices axiaux avec tiges (8).

3. Mécanisme de préhension selon la revendication 1 ou 2, **caractérisé par le fait que**
les tourillons (6) des arbres d'entraînement (5a, 5b, 5c, 5d, 6) en tant que palier à collet forment partie intégrante des bielles (10a, 10b, 10c) entraînées par les arbres d'entraînement.

4. Mécanisme de préhension selon la revendication 1 ou 2, **caractérisé par le fait que**
les tourillons (6) des arbres d'entraînement forment partie intégrante de la pièce centrale (5a, 5b, 5c, 5d) des arbres d'entraînement.

5. Mécanisme de préhension selon l'une des revendications 2 ou 3, **caractérisé par le fait que**
les côtés frontaux de la pièce centrale (5a, 5b, 5c, 5d) des arbres d'entraînement servent de surfaces axiales de palier (7a) des arbres d'entraînement.

6. Mécanisme de préhension selon la revendication 2 ou 3, **caractérisé par le fait que**
les surfaces axiales de palier (7b) de l'arbre d'entraînement se trouvent sur les côtés frontaux des bielles (10a, 10b, 10c) entraînées par les arbres d'entraînement ou d'une bielle et d'un contrepalier.

7. Mécanisme de préhension selon l'une des revendications précédents, **caractérisé par le fait que**
plusieurs doigts préhenseurs (11a, 11b) sont entraînés en liaison avec un dispositif de transmission de mouvement (1, 10, 11, 12) par deux arbres d'entraînement (5, 6) situés autour d'une unité centrale d'actionnement ou dotés de leur propre unité d'actionnement.
